# EUROPEAN PATENT APPLICATION

(11) **EP 3 279 612 A1**
(43) Date of publication of application: **07.02.2018**
(21) Application number: 17020336.8
(22) Date of filing: 04.08.2017
(51) Int. Cl.: G01D 4/00, E03B 7/04, G01F 1/00, G01F 15/06, G05D 7/00

(54) **SMART WATER MONITORING DEVICE**

(30) Priority: 05.08.2016 ES 201600576 U
(71) Applicant: Ray, Javier, 08195 Sant Cugat Barcelona (ES)
(72) Inventor: Ray, Javier, 08195 Sant Cugat Barcelona (ES)

(57) **Abstract**

Existing smart meters in the market send the meter readings to the water supplier company, not to the end user (who get ∼ 4 invoices / year) . This water flow smart meter is designed to send feedback to the user in real time ; the display and the flow measuring unit are physically apart.

The purpose of this water flow measurement is to raises awareness. As a result less water, energy (required for water heating) are used. CO₂ footprint is reduced too.

The box (containing the Hall effect flow meters and temperature sensors) is normally placed after the bathroom stopcocks. It measures water flow from any element (sink, shower, flush, bidet...). The display is integrated in the bathroom mirror. It's invisible until a tap is opened. The user is able to monitor in real time:
• sink, shower, toilet flush, bidet or bath consumption during each use
• accumulated water consumption during the day (in litres or galons)
• water temperature selected by user in ºC or ºF
• The "remaining amount of water left for the day " when a daily consumption target has been previously set.

The sensors and the display can be connected either by cable or paired by radiofrequency.
Optionally, the device can also send the hot and cold water flow and temperature data to the cloud for statistical treatment by our algorithms. This information is useful (for the facility manager or owners) to decide water and energy saving strategies (for example fine tune water heaters according exactly to demand).
The Software can :
• detect leaks and send automatic alarms,
• compare historic data,
• calculate costs,
• trends,
• compare average consumption between users. This comparison is anonymous and the aim is to encourage consumers with high consumptions to understand and, eventually, take countermeasures.
• correlate external temperature to user selected comfort temperature
• correlate external RH% to user selected comfort temperature.

In summary, this water flow monitor empowers users have a better control of their water usage and achieve savings.

## Description

### OBJECT OF THE EP

This device, which belongs to the hydraulic sector, monitors total water consumption of a bathroom and shows it to the user in real time to raise awareness. It's an effective way to save water as most users make a more responsible use of it when they receive this feedback.

On average, 26% of energy demand of a typical household goes to water heating. The SW platform linked to the HW can collect hot & cold water flow and temperatures, perform statistical data analysis. This information can be used to program centralized water heaters according to demand, forecast bills, compare with historic data...

### APPLICATION FIELDS

The water monitoring device enables water and energy savings in hotels, sports facilities, private households and public buildings such as offices, schools, hospitals... Anywhere where domestic water is used there is a saving potential.

Installation can be done by each water outlet, sink, bidet, flush, shower, bathtub...) or a whole bathroom which is standard practise. The measuring unit (transmitter) is normally placed after the bathroom stopcocks. The display is normally placed behind a 2 way mirror.

### BACKGROUND.

In general terms, water meters supplied by water company providers are located in closets, which are not always easily accessible. Users get their consumption via a rather complex bill every 1 - 3 months. This does not really help in generating user awareness, nor raises consciousness in order to make a more responsible water use, nor save energy & reduce CO₂ emissions.

In addition, the two services involved, water and electricity and / or gas (for water heating), are usually supplied by different companies in different invoices, making it difficult to assimilate the true environmental impact.

This EP not only allows the visualization of information of hot + cold water used in a bathroom, (where most of the water & energy associated to warm water is used) but It also allows users to set their own daily consumption target, empowering them to make a better use.

### Software Platform

In a complementary way, the system itself, through the management of information
available (on the network through a private restricted access), allows monitoring of hot & cold water flow & temperatures, benchmark vs. other buildings, compare historic data, trends, costs, correlates user selected temperature vs. external temperature and RH%... It also enables anonymous comparison between different consumers.

This device shows consumption (by means of flow meter) and temperature (by means of a thermocouple sensor) directly where and when water consumption takes place to raise users' awareness. Monitoring can be done for the complete bathroom as whole or individually (shower, bidet, sink, toilet flush...)

There are other water saving products in the market, aerators, timed faucets, electronic mixers ...which are complementary and compatible with the present invention, allowing implantation in economic terms. The differential characteristics / added value proposition is that the sensor and the non invasive display are physically separated, allow real time visualisation in the mirror, has user definable daily consumption target and a cloud software with statistical data treatment.

Some water saving devices in the market are expensive, making the return of investment higher. Other devices such as aerators, flow, pressure limiters are 100% compatible with our device.

The present EP aims to solve a need neither foreseen, nor met by the industry, which improves and provides a differential functionality, the total / partial consumption feedback to the user in real time. No maintenance nor calibration are required.

### DESCRIPTION

The smart water flow meter measures and displays the total (hot+cold) water consumption of a bathroom. After approximately ∼3 minutes of inactivity the counter is reset back to zero.

The device comprises a transmitter module and the display, which make up one unit.

The display module is used to visualize the consumption of resources, while the transmitter (normally one per bathroom) contains the mechanics and electronics.

Within the device, there is a low-friction shaft turbine (to minimize pressure losses) that rotates with water pressure and sends pulses proportional to the water flow. The electronic module determines the speed of rotation of the turbine blade and calculates the amount of water that is flowing per unit of time. This speed becomes a measured flow, either in liquid volume units of the international system (litres / minute), or the imperial system (gallons / minute).

Next to the turbine a temperature sensor measures hot and cold water temperature separately.

The sensor sends a voltage to an electronic circuit providing the hot and cold water temperatures.

The electronics and firmware determines the selected temperature by the user.

The electronic circuit captures, samples, amplifies and processes the signal by converting it to litres / minute or gallons per minute. The units are selectable by HW.

The value provided is digitized by an analog-to-digital converter, and sent to a display, via cable or wireless, located behind a mirror -all or partially translucent (double-sided) or reflectasol (fore-glass). The display could also be placed close to a sink, and monitor it individually...

The information displayed, in real time, remains visible for a few minutes in the display after closing the tap.

All information is processed by a micro-controller that manages the collected data from the sensors: flow, temperature and duration, together with date & duration and time of consumption are optionally stored on a server and statistically treated. This accumulated (or historical) information helps decide the water saving strategies. The data transmission between transmitter and display can be wireless or by wire (bus).

The device can detect leaks /abnormal consumptions when time or flow predefined values are met and send an alarm signal.

### DESCRIPTION OF THE INVENTION

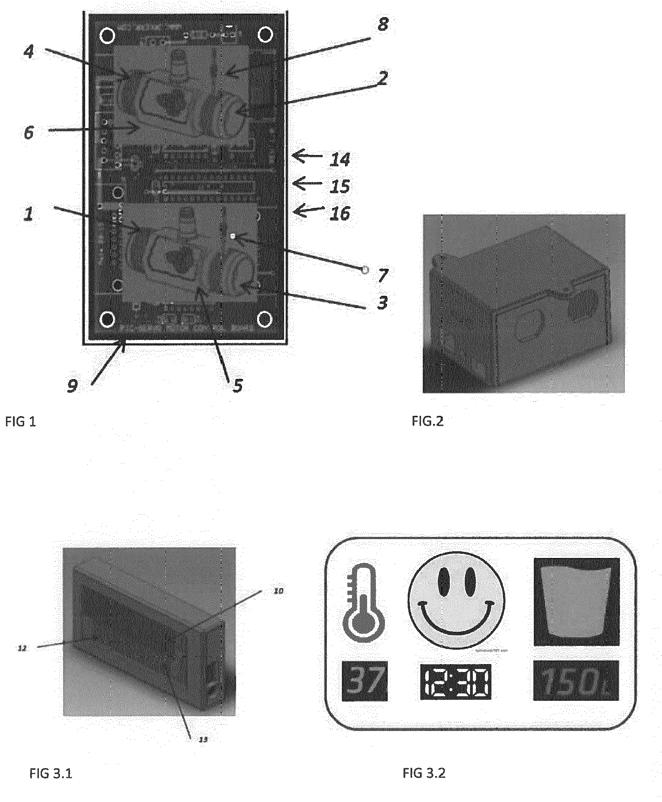

Figure 1: Consisting of open top view of the monitoring device, measurement of hot & cold water flows with two Hall effect flow meters and temperature sensors.
Figure 2: Consists of three-dimensional view of the monitoring device box which contains the flow meters, the temperature sensors and the electronics including communications
Figure 3.1 Upper view of display including litres/ temperature (ºC /ºF).
Figure 3.2 Upper view of graphic display (personalized logos, clock, chronometer, total / partial water consumption, smiley, leak alarm, advertisements, gamification messages...)

### PREFERRED EMBODIMENT OF THE INVENTION

The presented EP (constructed mainly of polymer), is composed of a housing, with power connector (14) and thread connectors for water tube connections made of material admitted according to sanitary drinking water regulation; Hot Water connexions (1 In, 3 out) and Cold Water (2 out and 4 in), which are connected to the main supply bathroom tubes normally located after the cock stops (either welded, threaded or using click connectors to the pipes or); allows measuring hot & cold flow through flow meters (5 and 6) and the temperature with the sensor (7 and 8).

The information is displayed after processing; the units (user selectable by hardware) can be in litres or gallons (10) and the selected temperature (12) in Centigrade or Fahrenheit (13).

Both devices are interconnected via cable connector (15) or radio frequency.

Printed circuit board with integrated communication module and antenna PCB- (9).

## Claims

1. Water consumption monitoring device, **characterized in that** it includes standard connection for 2 water pipes / tubes (for hot and cold water flow measurement) and send the total water consumption in real time to a display separated from the measurement unit.

2. Device for monitoring the consumption of water, according to claim 1 **characterized in that** it calculates the temperature selected by user and shows it in real time in the display, which is physically separated from the measuring unit.

3. Device for monitoring the consumption of water according to claim 1,2 **characterized in that** it projects information in a special mirror only when bathroom water tap(s) are opened ; the display unit is placed behind the mirror remains invisible to the user while taps are closed. The display can also show advertisements / warning messages / time or personalized logo in stand-by mode (while taps are closed)

4. Device for monitoring the consumption of water, according to claims 1 and 2 **characterized in that** the captured flow & temperature information for hot and cold water can be sent to the cloud for statistical treatment.

5. Device for monitoring the consumption of water, according to claim 1 **characterized in that** the user can define a daily water consumption target and monitor it in real time on the display.

6. Device for monitoring water consumption according to claim 1,2 **characterized in that** it can provide real time intuitive graphic feedback to the user such as : smiley, chronometer, traffic lights signal, alarms, energy class...)

7. Device for monitoring water consumption according to claim 1 and 5 **characterized in that** it can close the water flow once the prepaid consumption target has been used. (pay per use deature)
